# EUROPÄISCHE PATENTSCHRIFT

(11) **EP 0 615 876 B1**
(45) Veröffentlichungstag und Bekanntmachung des Hinweises auf die Patenterteilung: **11.09.1996**
(21) Anmeldenummer: 94103824.2
(22) Anmeldetag: 11.03.1994
(51) Int. Cl.: B60J 10/12

(54) **Starrer Deckel für ein Fahrzeugdach**
Rigid panel for a vehicle roof
Panneau rigide pour toit de véhicule

(30) Priorität: 15.03.1993 DE 4308215
(43) Veröffentlichungstag der Anmeldung: 21.09.1994
(73) Patentinhaber: METZELER Automotive Profiles GmbH, D-88131 Lindau (DE)
(72) Erfinder: Glagow, Klaus, D-88142 Wasserburg (DE); Brocke, Rolf, D-88239 Wangen (DE)
(74) Vertreter: Preissner, Nicolaus, Dipl.-Ing.

(56) Entgegenhaltungen:
- DE-C- 3 940 304
- GB-A- 2 105 659
- GB-A- 2 118 601
- GB-A- 2 171 442

## Beschreibung

Die Erfindung bezieht sich auf einen starren Deckel für ein Fahrzeugdach mit einer umlaufenden Dichtung gegenüber der Dachöffnung, mit einer Glasplatte, die mit einem im Randbereich untergelegten und seitlich überstehenden Grundrahmen verbunden ist und an dessen überstehendem Rand ein umlaufender Alu-Rahmen befestigt ist, der auf seiner Außenseite eine Spaltdichtung aufweist.

Ein derartiger Deckel ist aus der DE-A-3 639 894 bekannt. Dabei besteht dieser Deckel aus einer Vielzahl von Einzelteilen, die bei der Montage aufwendig zusammengefügt werden müssen. Der untergelegte Innenrahmen weist dabei einen hochgestellten Rand auf, auf den zunächst die entsprechend geformte und mit Metalleinlagen versehene Spaltdichtung aufgesteckt wird. Anschließend wird über diese Dichtung und der mit dem Innenrahmen verbundenen Glasplatte ein T-förmiges Aluprofil aufgelegt, das dann von unten mit Schrauben gegeneinander verspannt wird. Somit sind eine vielzahl von Arbeitsgängen und Hilfsmittel erforderlich, um einen fertigen Deckel zu schaffen.

Der vorliegenden Erfindung liegt demgegenüber die Aufgabe zugrunde, einen solchen starren Deckel zu schaffen, der sehr viel einfacher hergestellt und insbesondere aus weniger Einzelteilen montiert werden kann und als fertiges Bauteil angeliefert wird.

Zur Lösung dieser Aufgabe ist erfindungsgemäß vorgesehen, daß die Glasplatte aus zwei, miteinander verbundenen Scheiben besteht, dessen untere Scheibe seitlich überstehend größer als die obere Scheibe ist, daß der Grundrahmen mit einem hochgebogenen Rand die untere Scheibe mit Abstand umfaßt und der angenähert T-förmige Alurahmen mit einer Seite die untere Scheibe überdeckt und an der anderen Seite eine hinterschnittene Nut zur Aufnahme eines tannenbaumförmigen Fußes der Spaltdichtung aufweist, wobei die Spalten zwischen überstehendem Rand des Grundrahmens, den Kanten der Deckelscheiben und dem T-förmigen Alurahmen mit einer Masse aus Polyurethan ausgespritzt oder ausgeschäumt sind.

Damit läßt sich im Grunde in einem einzigen Herstellungsschritt ein fertiges Bauteil für den Deckel schaffen, an dem dann nur noch die Spaltdichtung eingeknöpft werden muß.

Die Spaltdichtung selbst besteht dabei zweckmäßigerweise aus einem flachen Hauptprofilsteg aus einem Elastomer, auf dessen einer Seite ein tannenbaumförmiger Ansatz zur Bildung einer Schwalbenschwanzverbindung mit der Nut des T-förmigen Alurahmens angeformt ist und auf dessen anderer Seite ein Hohlkammerprofil aus Moosgummi mit einer außenseitigen Beflockung anextrudiert ist.

Zweckmäßigerweise ist auch die Oberseite des T-förmigen Alurahmens mit Polyurethan umspritzt, derart, daß die gespritzte Oberfläche bündig mit der Oberseite der Glasplatte abschließt.

Zur Begrenzung des PU-Flusses können zwischen Grundrahmen und Glasplatte sowie zwischen hochgebogenen Rand des Grundrahmens und T-förmigen Aluprofil noch Schaumstoffstreifen eingeklebt sein.

In Weiterbildung der Erfindung besteht die Spaltdichtung aus einem Profilabschnitt (A) an der Vorderseite des Deckels mit einer von der Hohlkammerdichtung schräg nach außen und unten abragenden Dichtlippe sowie einem Profilabschnitt (B) an den übrigen Umfangskanten des T-förmigen Alurahmens mit einem vom Profilhauptsteg nach unten abragenden Dichtsteg, wobei die beiden Profilabschnitte (A) und (B) an ihren Stoßkanten miteinander verklebt sind.

Als zusätzliche Einklemmsicherung kann der Profilabschnitt (A) im mittleren Übergangsbereich von der Hohlkammerdichtung zum Hauptprofilsteg eine doppeladrige Kontaktschnur aufweisen.

Sehr zweckmäßig ist es ferner, wenn zwischen den beiden Deckelscheiben eine Sonnenschutzfolie oder aber auch Solarzellen angeordnet sind.

Bei einem Verfahren zur Herstellung eines Deckels ist erfindungsgemäß vorgesehen, daß die doppelscheibige Glasplatte, der Grundrahmen und das T-förmige Aluprofil zu einander positioniert, die dazwischen freibleibende Spalte sowie die Oberseite des T-förmigen Aluprofiles mit einer aushärtenden PU-Masse ausgespritzt und anschließend die Spaltdichtung in die seitliche Nut des Aluprofiles eingeknöpft wird.

Anhand an einer schematischen Zeichnung sind Aufbau und Funktionsweise von Ausführungsbeispielen nach der Erfindung näher erläutert. Dabei zeigen:
- Figur 1: eine Aufsicht auf den Deckel innerhalb der Dachöffnung,
- Figur 2: einen Längsschnitt durch den Randbereich des Deckels an der Vorderkante mit der aufgeclipsten Dichtung entsprechend der Schnittlinie II-II nach Figur 1,
- Figur 3: eine gleichartige Dichtung nach Figur 2 für die übrigen, umlaufenden Bereiche des Deckels entsprechend der Schnittlinie III-III nach Figur 1 und
- Figur 4: einen Schnitt durch die Spaltdichtung mit eingelagerter Kontaktschnur.

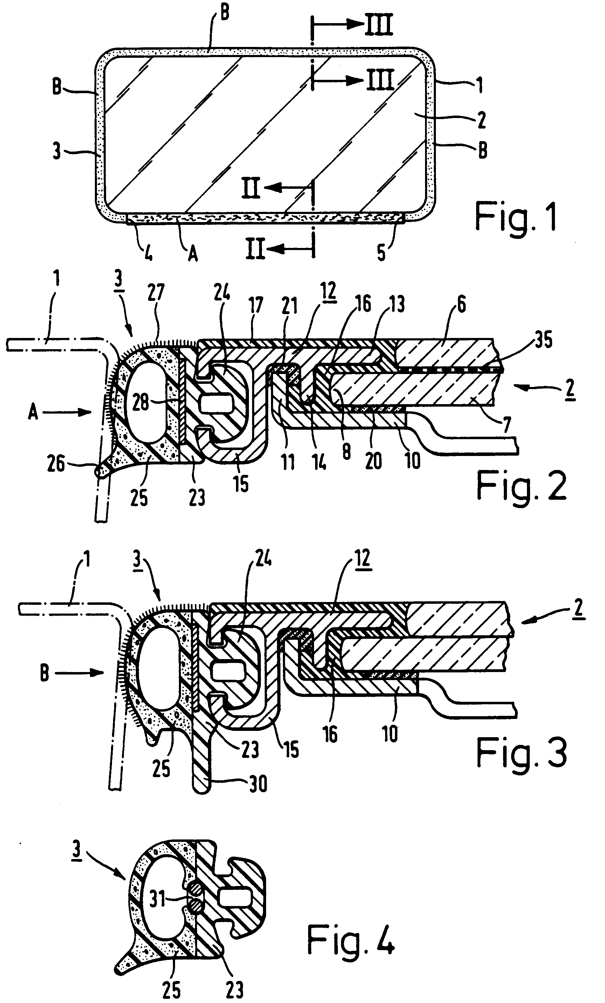

Nach der in Figur 1 dargestellten Aufsicht auf ein Fahrzeugdach mit einer rechteckigen Dachöffnung 1 ist der im wesentlichen aus einer Glasplatte 2 bestehende Deckel allseitig von einer Spaltdichtung 3 zur Dachöffnung 1 umschlossen. Diese Spaltdichtung besteht dabei aus zwei unterschiedlichen Profilabschnitten, nämlich dem Profilabschnitt A an der zu öffnenden Vorderkante des Deckels und dem Profilabschnitt B, der die übrigen Bereiche des Deckels 2 umschließt. Dabei weist der Profilabschnittt A zum Profilabschnitt B zwei Stoßstellen 4 und 5 auf, an denen die beiden Profilabschnitte A und B miteinander verklebt sind.

In Figur 2 ist ein Querschnitt durch den Randbereich des Deckels entsprechend der Schnittlinie II-II nach Figur 1 gezeigt. Danach besteht die Glasplatte 2 aus zwei Scheiben 6 und 7, wobei die untere Scheibe 7 geringfügig größer ist als die obere Scheibe 6 und mit ihrem Rand 8 seitlich übersteht. Die Glasplatte 2 ist dabei auf einen Grundrahmen 10 aufgelegt, der am Außenumfang einen hochgebogenen Rand 11 aufweist.

Darüberhinaus weist der Deckel einen angenähert T-förmigen Alu-Rahmen 12 auf, der mit einem seitlichen Schenkel 13 den überstehenden Rand 8 der Scheibe 7 übergreift und mit seinem vertikalen Schenkel 14 in den Spalt zwischen hochgebogenem Rand 11 des Grundrahmens 10 sowie dem Rand 8 der unteren Scheibe 7 eingreift.

Auf der linken Seite ist an den Alu-Rahmen 12 nach unten eine hinterschnittene Nut 15 angesetzt, deren Funktion noch später erläutert wird.

Die freien Spalten zwischen dem T-förmigen Alu-Rahmen 12, der Glasplatte 2 und dem untergelegten Grundrahmen 10 sowie die Oberseite des T-förmigen Alu-Rahmens sind nunmehr mit einer Masse 16 aus Polyurethan ausgespritzt bzw. ausgeschäumt, so daß sich nach Aushärten dieser Masse eine feste Verbindung und eine bauliche Einheit zwischen den genannten Komponenten ergibt. Die auf der Oberseite des T-förmigen Alu-Rahmens 12 aufgetragene Schicht 17 schließt dabei bündig mit der Oberfläche der oberen Scheibe 6 ab, so daß sich damit eine glatte Deckeloberfläche ergibt.

Um zu verhindern, daß die PU-Masse seitwärts austritt, sind vor dem Einspritzen zwischen der Glasplatte 2 und dem Grundrahmen 10 ein Schaumstoffstreifen 20 und zwischen dem hochgebogenen Rand 11 des Grundrahmens und dem T-förmigen Alu-Profil 12 ein Schaumstoffstreifen 21 eingeklebt.

Die eigentliche Spaltdichtung 3 besteht aus einem flachen, vertikal verlaufenden Hauptprofilsteg 23, auf dessen einer Seite ein tannenbaumförmiger Ansatz 24 abragt, der in die hinterschnittene Nut 15 des T-förmigen Alurahmens 12 eingreift und damit praktisch eine Schwalbenschwanzverbindung bildet. Der Hauptprofilsteg 23 mit seinem Ansatz 24 ist dabei zweckmäßigerweise aus einem Elastomer, insbesondere EPDM, mit einer Shore-A-Härte von 70 gefertigt.

Auf der anderen Seite des Hauptprofilsteges 23 ist ein Hohlkammerprofil 25 aus Moosgummi anextrudiert, das eine seitlich schräg nach unten abragende Dichtlippe 26 aufweist. Die Ober- und Außenseite dieses Hohlkammerprofiles 25 ist dabei noch mit einer Beflockung 27 zum leichteren Gleiten an der Dachöffnung 1 versehen.

Zusätzlich kann der Hauptprofilsteg 23 noch mit einer Versteifung in Form eines Aluminiumbandes 28 versehen sein, um damit ein mögliches Schrumpfen auszugleichen.

Der so hergestellte Deckel mit der eingeclipsten Spaltdichtung 3 kann dann als einstückiges Bauteil angeliefert und eingebaut werden.

Der in Figur 2 dargestellte Längsschnitt entspricht dabei dem Profilabschnitt A an der Vorderkante des Deckels entsprechend der Darstellung in Figur 1.

Figur 3 zeigt einen Längsschnitt durch den Randbereich des Deckels im Bereich der Profilabschnitte B entsprechend der Schnittlinie III-III aus Figur 1, die die übrigen Ränder des Deckels umziehen. Der Grundaufbau von Glasplatte 2, untergelegtem Grundrahmen 10 sowie T-förmigem Aluprofil 12 ist hier die gleiche wie in Figur 2. Lediglich die Spaltdichtung 3 unterscheidet sich dadurch, daß der Hauptprofilsteg 23 einen nach unten abragenden Dichtsteg 30 aufweist und die Dichtlippe 26 zum Deckel 1 weggeschnitten ist.

Figur 4 zeigt eine weitere Variante der Spaltdichtung 3, bei der im Übergangsbereich vom Hohlkammerprofil 25 zum Hauptprofilsteg 23 im mittleren Bereich eine doppeladrige Kontaktschnur 31 einvulkanisiert ist. Diese Kontaktschnur ist an eine Stromquelle angeschlossen und dient als Sicherung beim Schließvorgang des Deckels, um ein Einklemmen zu verhindern.

Zusätzlich ist es noch möglich, - wie schematisch in Fig. 2 angedeutet - , daß zwischen den beiden Deckelscheiben 6 und 7 eine Sonnenschutzfolie 35 oder aber auch Solarzellen als Energieerzeuger eingebaut sind.

Insgesamt ergibt sich also ein Deckel für ein Fahrzeugdach, der aus wenigen Einzelteilen aufgebaut ist und einfach herzustellen ist, um dann als einstückiges Bauteil leicht montiert werden zu können.

## Patentansprüche

1. Starrer Deckel für ein Fahrzeugdach mit einer umlaufenden Dichtung gegenüber der Dachöffnung (1), mit einer Glasplatte (2), die mit einem im Randbereich untergelegten und seitlich überstehenden Grundrahmen (10) verbunden ist, und an dessen überstehendem Rand (11) ein umlaufender Alu-Rahmen (12) befestigt ist, der auf seiner Außenseite eine Spaltdichtung (3) aufweist, dadurch gekennzeichnet, daß die Glasplatte (2) aus zwei, miteinander verbundenen Scheiben (6, 7) besteht, dessen untere Scheibe (7) seitlich überstehend größer als die obere Scheibe (6) ist, daß der Grundrahmen (10) mit einem hochgebogenen Rand (11) die untere Scheibe (7) mit Abstand umfaßt und der angenähert T-förmige Alu-Rahmen (12) mit einer Seite die untere Scheibe (7) überdeckt und an der anderen Seite eine hinterschnittene Nut (15) zur Aufnahme eines tannenbaumförmigen Fußes (24) der Spaltdichtung (3) aufweist, wobei die Spalten zwischen überstehendem Rand (11) des Grundrahmens (10), den Kanten (8) der Deckelscheiben (6, 7) und dem T-förmigen Alurahmen (12) mit einer Masse (16) aus Polyurethan ausgeschäumt oder ausgespritzt sind.

2. Deckel nach Anspruch 1, dadurch gekennzeichnet, daß die Spaltdichtung (3) aus einem flachen Hauptprofilsteg (23) aus einem Elastomer besteht, auf dessen einer Seite ein tannenbaumförmiger Ansatz (24) zur Bildung einer Schwalbenschwanzverbindung mit der Nut (15) des T-förmigen Alurahmens (12) angeformt ist und auf dessen anderer Seite ein Hohlkammerprofil (25) aus Moosgummi mit einer außenseitigen Beflockung (27) anextrudiert ist.

3. Deckel nach Anspruch 1, dadurch gekennzeichnet, daß auch die Oberseite des T-förmigen Alu-Rahmens (12) mit Polyurethan (17) umspritzt ist, derart, daß die gespritzte Oberfläche (17) bündig mit der Oberseite der Glasplatte (2) abschließt.

4. Deckel nach Anspruch 1, dadurch gekennzeichnet, daß zwischen Grundrahmen (10) und Glasplatte (2) sowie zwischen hochgebogenem Rand (11) des Grundrahmens (10) und dem T-förmigen Aluprofil (12) Schaumstoffstreifen (20, 21) zur Begrenzung des PU-Flusses eingeklebt sind.

5. Deckel nach einem oder mehreren der Ansprüche 1 bis 4, dadurch gekennzeichnet, daß die Spaltdichtung (3) aus einem Profilabschnitt (A) an der Vorderseite des Deckels mit einer von der Hohlkammerdichtung (25) schräg nach außen und unten abragenden Dichtlipppe (26) und einem Profilabschnitt (B) an den übrigen Umfangskanten des T-förmigen Alu-Rahmens (12) mit einem vom Profilhauptsteg (23) nach unten abragenden Dichtsteg (30) besteht und daß die beiden Profilabschnitte (A) und (B) an ihren Stoßkanten (4, 5) miteinander verklebt sind.

6. Deckel nach Anspruch 5, dadurch gekennzeichnet, daß der Profilabschnitt (A) im mittleren Übergangsbereich von der Hohlkammerdichtung (25) zum Hauptprofilsteg (23) eine doppeladrige Kontaktschnur (31) als Einklemmsicherung aufweist.

7. Deckel nach Anspruch 1, dadurch gekennzeichnet, daß zwischen den Deckelscheiben (6, 7) eine Sonnenschutzfolie (35) angeordnet ist.

8. Deckel nach Anspruch 1, dadurch gekennzeichnet, daß zwischen den beiden Deckelscheiben (6, 7) Solarzellen eingebaut sind.

9. Verfahren zur Herstellung eines Deckels nach Anspruch 1, dadurch gekennzeichnet, daß die doppelscheibige Glasplatte, der Grundrahmen und T-förmige Aluprofil zueinander positioniert, die dazwischen freibleibende Spalte sowie die Oberseite des T-förmigen Aluprofiles mit einer aushärtenden PU-Masse ausgespritzt und anschließend die Spaltdichtung in die seitliche Nut des Aluprofiles eingeknöpft wird.

## Claims

1. A rigid panel for a vehicle roof with a circumferential seal relative to the roof opening (1), with a glass plate (2), which is connected to a base frame (10) placed underneath and projecting laterally in the edge region, a circumferential aluminium frame (12) being secured to the projecting edge (11) of the base frame (10), which aluminium frame comprises a gap seal (3) on its outside, characterised in that the glass plate (2) is formed by two panes (6, 7), which are connected to one another, the lower pane (7) being larger than the upper pane (6) so as to project laterally beyond the upper pane, the base frame (10) encloses the lower pane (7) with clearance with an upwardly bent edge (11) and the approximately T-shaped aluminium frame (12) covers the lower pane (7) with one side and on the other side comprises an undercut groove (15) for receiving a fir tree-shaped foot (24) of the gap seal (3), the gaps between the projecting edge (11) of the base frame (10), the edges (8) of the panel panes (6, 7) and the T-shaped aluminium frame (12) being foam-filled or injected with a mass (16) of polyurethane.

2. A panel according to claim 1, characterised in that the gap seal (3) is made of a flat main profile web (23) made of an elastomer, onto one side of which a fir tree-shaped extension (24) is moulded to form a dovetail connection with the groove (15) of the T-shaped aluminium frame (12) and onto the other side of which a cavity profile (25) made of foam rubber with external flocking (27) is extruded.

3. A panel according to claim 1, characterised in that polyurethane (17) is also spayed around the upper side of the T-shaped aluminium frame (12) in such a manner that the sprayed surface (17) adjoins with the upper side of the glass plate (2) in a flush manner.

4. A panel according to claim 1, characterised in that foam strips (20, 21) for limiting the polyurethane flow are bonded between the base frame (10) and the glass plate (2) and between the upturned edge (11) of the base frame (10) and the T-shaped aluminium profile (12).

5. A panel according to one or more of claims 1 to 4, characterised in that the gap seal (3) is formed by a profile section (A) on the front side of the panel with a sealing lip (26), which projects outwards and downwards at an angle from the cavity seal (25), and a profile section (B) on the remaining circumferential edge of the T-shaped aluminium frame (12) with a sealing web (30), which projects downwards from the main profile web (23), and the two profile sections (A) and (B) are bonded to one another at their abutting edges (4, 5).

6. A panel according to claim 5, characterised in that the profile section (A) comprises a double-core contact cord (31) as an anti-jamming element in the central transition region between the cavity seal (25) and the main profile web (23).

7. A panel according to claim 1, characterised in that a sun protection film (35) is arranged between the panel panes (6, 7).

8. A panel according to claim 1, characterised in that solar cells are fitted between the two panel panes (6, 7).

9. A method for manufacturing a panel according to claim 1, characterised in that the double-pane glass plate, the base frame and the T-shaped aluminium profile are positioned relative to one another, the remaining intermediate gaps and the upper side of the T-shaped aluminium profile are injected with a hardening polyurethane mass and the gap seal is then buttoned into the lateral groove in the aluminium profile.

## Revendications

1. Couvercle rigide pour un toit de véhicule, comportant un joint périphérique par rapport à l'ouverture de toit (1), une plaque en verte (2) qui est reliée à un cadre de base (10) posé au-dessous dans une région de bordure et dépassant latéralement, et sur la bordure en dépassement (11) du cadre est fixé un cadre périphérique en aluminium qui présente sur sa face extérieure un joint de fente (3), caractérisé en ce que la plaque en verte (2) est constituée par deux vitres (6, 7) reliées l'une à l'autre, dont la vitre inférieure (7) est plus grande en dépassement latéral que la vitre supérieure (6), en ce que le cadre de base (10) entoure à distance la vitre inférieure (7) par une bordure (11) coudée vers le haut, et en ce que le cadre en aluminium (12), qui présente approximativement une forme en T, recouvre sur un côté la vitre inférieure (7) et présente sur l'autre côté une gorge (15) en contre-dépouille pour recevoir un pied (24) en forme de champignon du joint de fente (3), les fentes entre la bordure dépassante (11) du cadre de base (10), les arêtes (8) des vitres de couvercle (6, 7) et le cadre en aluminium (12) en forme de T étant remplies par moussage ou projection d'une masse (16) en polyuréthane.

2. Couvercle selon la revendication 1, caractérisé en ce que le joint de fente (3) est constitué par une barrette profilée principale plate (23) en élastomère, sur l'un des côtés de laquelle est formé un talon (24) en forme de champignon pour former une liaison à queue d'aronde avec la gorge (15) du cadre en aluminium (12) en forme de T, et sur l'autre côté de laquelle est extrudé un profilé (25) à chambre creuse en caoutchouc mousse comportant un flocage (27) du côté extérieur.

3. Couvercle selon la revendication 1, caractérisé en ce que la face supérieure du cadre en aluminium (12) en forme de T est entourée par projection de polyuréthane (17), de telle sorte que la surface projetée (17) se raccorde en affleurement à la face supérieure de la plaque en verte (2).

4. Couvercle selon la revendication 1, caractérisé en ce qu'entre le cadre de base (10) et la plaque en verte (2), ainsi qu'entre la bordure (11) coudée vers le haut du cadre de base (10) et le profilé en aluminium (12) en forme de T sont collées des bandes de mousse (20, 21) pour délimiter l'écoulement du polyuréthane.

5. Couvercle selon l'une ou plusieurs des revendications 1 à 4, caractérisé en ce que le joint de fente (3) est constitué par un tronçon profilé (A) sur le côté avant du couvercle avec une lèvre d'étanchement (26) faisant saillie depuis le joint (25) à chambre creuse en oblique vers l'extérieur et vers le bas, et par un tronçon profilé (B) sur les arêtes périphériques restantes du cadre en aluminium (12) en forme de T avec une barrette d'étanchement (30) faisant saillie depuis la barrette profilée principale (23) vers le bas, et en ce que les deux tronçons profilés (A) et (B) sont collés l'un avec l'autre par leurs arêtes de jointure (4, 5).

6. Couvercle selon la revendication 5, caractérisé en ce que le tronçon profilé (A) présente dans la région de transition médiane depuis le joint (25) à chambre creuse jusqu'à la barrette profilée principale (23) un cordon de contact (31) à brin double en tant que blocage de coincement.

7. Couvercle selon la revendication 1, caractérisé en ce qu'il est prévu entre les vitres de couvercle (6, 7) un film anti-solaire (35).

8. Couvercle selon la revendication 1, caractérisé en ce que des cellules solaires sont montées entre les deux vitres de couvercle (6, 7).

9. Procédé pour réaliser un couvercle selon la revendication 1, caractérisé en ce que la plaque en verte à double vitre, le cadre de base et le profilé en aluminium en forme de T sont positionnés les uns par rapport aux autres, en ce que la fente existante entre eux ainsi que la face supérieure du profilé en aluminium en forme de T est remplie par projection d'une masse en polyuréthane durcissable, et en ce que le joint de fente est ensuite boutonné dans la gorge latérale du profilé en aluminium.
